Europäisches Patentamt

European Patent Office

Office européen des brevets

(11) Veröffentlichungsnummer: **0 229 744
B1**

(12) **EUROPÄISCHE PATENTSCHRIFT**

(45) Veröffentlichungstag der Patentschrift:
**27.06.90**

(21) Anmeldenummer: **87810011.4**

(22) Anmeldetag: **08.01.87**

(51) Int. Cl.⁵: **F16H 25/22**

(54) **Verbesserter Rollen-Gewinde-Trieb.**

(30) Priorität: **08.01.86 CH 31/86**

(43) Veröffentlichungstag der Anmeldung:
**22.07.87 Patentblatt 87/30**

(45) Bekanntmachung des Hinweises auf die Patenterteilung:
**27.06.90 Patentblatt 90/26**

(84) Benannte Vertragsstaaten:
**AT BE CH DE FR GB IT LI LU NL SE**

(56) Entgegenhaltungen:
**EP-A- 0 049 788
CH-A- 574 574
DE-A- 2 112 785
US-A- 3 744 332**

(73) Patentinhaber: **GSA AG, Subingenstrasse 149,
CH-4511 Horriwil(CH)**

(72) Erfinder: **Ziegler, Urs, Bergacker, CH-4511 Horriwil(CH)**

(74) Vertreter: **Gasser, François W., Postfach 1555,
CH-3001 Bern(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Beschreibung

Die vorliegende Erfindung betrifft einen Rollen-Gewinde-Trieb gemäss dem Oberbegriff des Patentanspruchs 1.

Rollen-Gewinde-Triebe mit zentral angeordneter Gewindespindel, um die herum gleichmässig verteilt Satelliten angeordnet sind, die sowohl mit der Spindel als auch mit einer aussen liegenden, innenverzahnten Mutter im Eingriff stehen, sind bekannt und werden auf dem Markt teilweise als Rollen- oder Planetenrollen-Spindeln bezeichnet. Angesichts der Tatsache, dass die Satelliten einerseits über ihre ganze Länge mit ihrem Gewinde mit dem Gewinde der zentral angeordneten Spindel und andererseits mit dem Gewinde der aussen herum angeordneten Mutter im Eingriff stehen, müssen sämtliche Teile ausserordentlich präzise gearbeitet sein, so dass die beiden sich durch die Eingriffe Spindel/Satellit und Satellit/Mutter ergebenden Uebersetzungen bei allen Satelliten möglichst identisch sind, denn bereits kleine Abweichungen können zur Zerstörung oder dem Verklemmen der Triebe führen. Dies ist verstärkt da der Fall, wo wie beispielsweise in EP-A 49 788 beschrieben die Enden der Satelliten zusätzlich verzahnt sind und in einer Innenverzahnung einer speziellen Positionierungsmutter laufen, deren Aufgabe es ist, zu verhindern, dass die einzelnen Satelliten ihre Parallelität zu der Spindel verlieren und dadurch den Trieb blockieren. Um die sich aus der Anordnung eines dritten Eingriffes ergebenden Probleme zu vermeiden, hat man beispielsweise gemäss DE-A 2 112 785 oder CH-AS 574 574 schon versucht, Gewinde-Satelliten-Antriebe zu machen, bei denen die Satelliten in einem Käfig gelagert sind, so dass ihre Parallelität zur Spindel jederzeit gewährleistet ist. Da es aber fast unmöglich ist, mehrere Satelliten zu haben, deren Teilkreisdurchmesser absolut identisch sind, was die Voraussetzung ist, damit die Satelliten auch nach mehreren Umdrehungen in der ursprünglichen Lage zueinander stehen und sich keine Notwendigkeit ergibt, Abwälzunterschiede zu kompensieren, funktionieren solche Gewinde-Satelliten-Antriebe nur bei kleinen zu übertragenden Leistungen und für relativ wenige Umdrehungen der Spindel. Bei hohen zu übertragenden Kräften und vielen Spindeldrehungen bauen sich in den einzelnen Eingriffen so hohe Kräfte auf, dass die Gewinde zerstört werden. Dies ist verständlich, wenn man bedenkt, dass eine Abweichung des Teilkreisdurchmessers von nur 1/100 mm pro hundert Umdrehungen eines Satelliten einen Abwälzfehler von 3,14 mm bewirkt, der aber wegen der festen Positionnierung der Satelliten nicht ausgeglichen werden kann. Um bei derartigen Trieben dennoch eine Kompensation zu ermöglichen, werden Satelliten verwendet, die kein Gewinde mit Steigung aufweisen, sondern rundum laufende Rillen aufweisen. Zudem werden diese Satelliten nach jeder Drehung um die Spindel in Richtung ihrer Längsachse um eine Rillendistanz verschoben, was eine spezielle Ausgestaltung des die Satelliten tragenden Käfigs und der aussenliegenden Mutter bedingt. Derartige Gewinde-Satelliten-Antriebe verursachen durch die Längsverschie-

bung der Satelliten zwangsläufig Lärm und können, wegen der fehlenden Steigung des "Gewindes" der Satelliten nur für kleine Steigungen hergestellt werden, was selbstverständlich nachteilig ist.

Der vorliegenden Erfindung liegt daher die Aufgabe zugrunde, einen Rollen-Gewinde-Trieb zu bauen, der keinen der Nachteile der bekannten Gewinde-Satelliten-Antriebe aufweist und trotzdem konstruktiv einfach aufgebaut ist, keine praktisch unmöglich zu erreichende Präzision fordert, um in der Praxis zu funktionnieren und auch für grosse Steigungen realisierbar ist.

Erfindungsgemäss wird diese Aufgabe durch einen Rollen-Gewinde-Trieb gelöst, wie er im Patentanspruch 1 definiert ist.

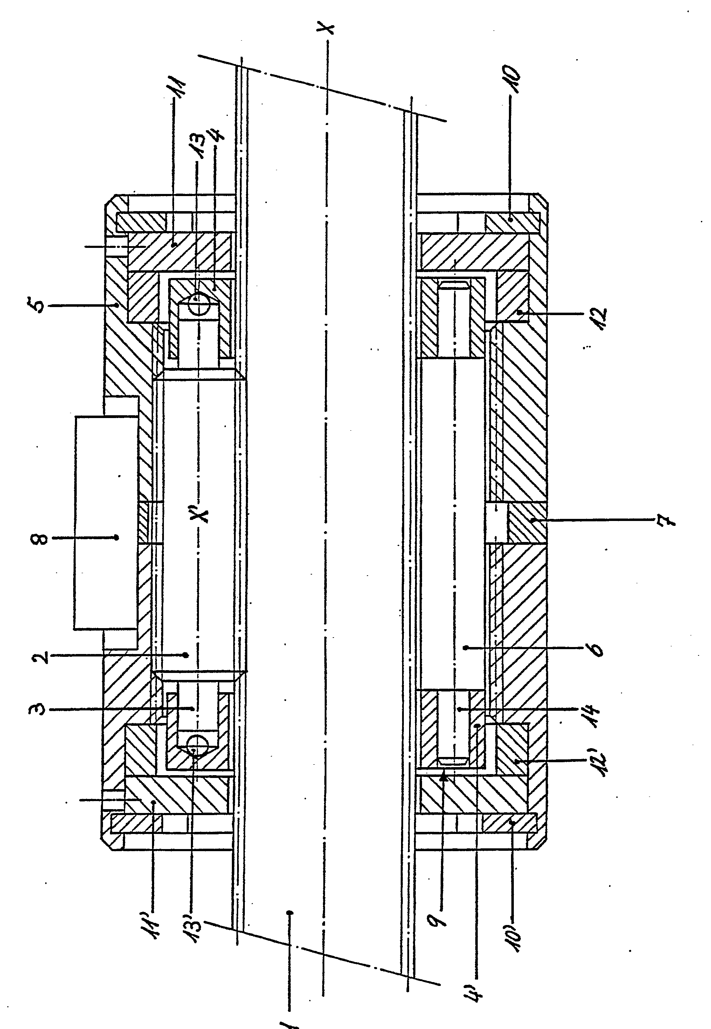

Im folgenden werden vorteilhafte Ausführungsvarianten des erfindungsgemässen Rollen-Gewinde-Triebs beschrieben, wobei deren eine in der Zeichnung dargestellt ist.

Man erkennt in der einzigen Figur eine ein Gewinde mit einer Steigung aufweisende Spindel 1, um die herum achsparallel Satelliten-Rollen 2 angeordnet sind, die ebenfalls Gewinde mit Steigung tragen. Die Zapfen 3 der Satelliten-Rollen 2 sind in mittels Mitnehmer-Stützen 6 zu einem Käfig 9 verbundenen Lagerscheiben 4, 4' gelagert. Aussen um die Satelliten-Rollen 2 herum ist eine ein Innengewinde tragende Mutter 5 angeordnet. Letztere kann vorteilhafterweise mit einem Vorspann-Ring 7 und einem Federkeil 8 versehen sein. Um den Käfig 9 innerhalb der Mutter 5 zu halten, wird diese vorteilhafterweise beidseitig durch Seeger-L-Ringe 10 und 10' abgeschlossen, an welche sich innen Anlaufscheiben 11, 11' anschliessen können. Um diese daran zu hindern gegen die Lagerscheiben 4, 4' zu liegen zu kommen, werden sie vorteilhafterweise mittels Distanz-Ringen 12, 12' positioniert.

Da, wie oben erwähnt, es praktisch unmöglich ist, in einem derartigen Rollen-Gewinde-Trieb alles in puncto Teilkreisdurchmesser identische Satelliten-Rollen 2 vorzufinden, muss diesen die Möglichkeit gegeben werden, die dadurch zwangsläufig entstehenden Abwälzdifferenzen auszugleichen. Da die Satelliten-Rollen 2 aber mittels ihrer Zapfen 3 im Käfig 9, respektive den Lagerscheiben 4, 4' bezüglich ihrer relativen Lage um die Spindel 1 herum positionniert sind und demnach seitlich nicht ausweichen können, kann der Abwälzfehler einer jeden Satelliten-Rolle 2 nur durch eine relative Bewegung entlang der jeweiligen Satelliten-Drehachse X', die wie erwähnt zur Spindelachse X parallel liegt, erfolgen. Aus diesem Grunde sind erfindungsgemäss die Satelliten-Rollen 2 mit Längsspiel in den Lagerscheiben 4, 4' drehbar gelagert.

Dieses Längsspiel kann erfindungsgemäss auf verschiedene Art und Weise sichergestellt werden. Entweder, wie in der dargestellten Ausführungsvariante, indem zwischen den beiden Zapfen 3 und den Lagerscheiben 4, 4' Kugeln 13, 13' angeordnet werden, über die die Zapfen 3 gegen die ihnen zugeordnete Lagerscheibe 4 oder 4' drücken können, wenn die Satelliten-Rolle 2 aufgrund eines Abwälzfehlers gegenüber den anderen Satelliten-Rollen 2 in Längsrichtung ausweichen muss. Es ist vorteilhaft, die Mitnehmer-Stützen 6, die vorteilhafterweise ebenfalls mittels Zapfen 14 in den Lagerscheiben 4, 4′ gelagert sind, nicht unverrückbar mit letzteren zu verbinden, sodass beim Auftreten vorbestimmter Längsdrücke die Lagerscheiben 4, 4′ auseinandergedrückt werden können. Dabei ist zu beachten, dass die maximale Längskompensation der Abwälzfehler im Verlaufe des ersten vollständigen Durchgangs des Rollen-Gewinde-Triebs die Lagerscheiben 4, 4′ auseinanderdrückt, worauf keine weitere Verschiebung derselben erwartet werden muss, da die Satelliten-Rollen 2 ja immer wieder in ihre Ausgangslagen zurückkehren. Wenn die Bearbeitungspräzision der Satelliten-Rollen 2 bekannt ist, kann daraus die grösste zu erwartende Längsbewegung der Satelliten-Rollen 2 berechnet werden, die bei einem Durchdrehen des Rollen-Gewinde-Triebs von einem Anschlag bis zum andern auftreten kann. Daraus lässt sich die Länge der Distanz-Ringe 12, 12′, resp. die zwischen diesen und den Lagerscheiben 4, 4′ vorzusehenden Längsspiele bestimmen.

In dieser Ausführungsvariante eines erfindungsgemässen Rollen-Gewinde-Triebs dienen die Kugeln 13, 13′ der Verminderung der Reibung zwischen Zapfen 3 und Lagerscheiben 4, 4′ während den Extremlagen der Satelliten-Rollen 2 und beim ersten vollen Durchgang, anlässlich von welchem die Lagerscheiben 4, 4′ auseinandergedrückt werden.

In einer anderen vorteilhaften Ausführungsvariante des erfindungsgemässen Gewinde-Rollen-Triebs können die Kugeln 13, 13′ fehlen, insbesondere dann, wenn die Distanz zwischen den Lagerscheiben 4, 4′ vorteilhafterweise von vorneherein so gewählt wird, dass die Satelliten-Rollen 2 ein genügendes Längsspiel haben. Bei dieser Ausführungsvariante ist es ferner vorteilhaft, wenn die Satelliten-Rollen 2 bei der Montage des Rollen-Gewinde-Triebs, resp. beim erstmaligen Aufsetzen des zusammengestellten Käfigs 9, alle in einer Endlage gehalten werden, sodass für jede Satelliten-Rolle 2 mit einem grösseren Teilkreisdurchmesser als die kleinste, oder umgekehrt, jede Satelliten-Rolle 2, mit einem kleineren Teilkreisdurchmesser als die grösste, in der vorbestimmten Längsrichtung ausweichen können, wenn der Käfig 9 vom einen Ende der Spindel 1 zum anderen gedreht wird.

Insbesondere bei grösseren und sehr hohen Belastungen ausgesetzten Rollen-Gewinde-Trieben kann es vorteilhaft sein, die Zapfen 3 der Satelliten-Rollen 2 flüssigkeitsgelagert in den Lagerscheiben 4, 4′ abzustützen, derart, dass z.B. alle Zapfenlager mit ihren Längsspielen mittels Kanälen und Bohrungen, die durch die Mitnehmer-Stützen 6 führen können, verbunden sind, so dass die bei einzelnen Satelliten-Rollen 2 entstehenden Drücke über die Flüssigkeit gleichmässig auf alle Satelliten-Rollen verteilt werden, was die übermässige Abnützung einzelner Satelliten-Rollen 2 mit extremen Teilkreisdurchmessern verhindert, da die hydraulische Verbindung zwischen den Satelliten-Rollen 2 diese in einen Gleichgewichtszustand bringt, in dem jede Satelliten-Rolle dauernd in seine optimale Längsposition gegenüber allen anderen Satelliten-Rollen gedrückt wird.

Eine weitere vorteilhafte Ausgestaltung des erfindungsgemässen Rollen-Gewinde-Triebs liegt darin, dass die Satelliten-Rollen 2 einseitig federbelastet in den Käfig 9 eingebaut werden, sodass beim Aufsetzen des Käfigs 9 auf die Spindel 1, sämtliche Satelliten-Rollen 2 die gleiche Endlage einnehmen, derart, dass wiederum jeder Satelliten-Rolle 2 das vorbestimmte Längsspiel, wie oben beschrieben, zur Verfügung steht.

## Patentansprüche

1. Rollen-Gewinde-Trieb mit zentraler Spindel (1) und aussenliegender Mutter (5) sowie mittels endständigen Zapfen (3) in einem Käfig (9) mit zwei Lagerscheiben (4, 4′) gelagerten achsparallel zur Spindel (1) rund um diese herum angeordneten und mit ihr sowie einer Innenverzahnung der Mutter (5) im Eingriff stehenden Satelliten-Rollen (2), dadurch gekennzeichnet, dass Mittel (6) vorgesehen sind, die es jeder Satelliten-Rolle (2) ermöglichen, während jedem Durchgang des Triebes von einem Anschlag zum anderen eine vorbestimmte Relativbewegung entlang ihrer Längsachse (X′) durchzuführen, und dass die Satelliten-Rollen (2) zwischen den Zapfen (3) Gewinde mit Steigung aufweisen, die mit einem entsprechenden Aussengewinde auf der Spindel (1) sowie einem entsprechenden Innengewinde der Mutter (5) im dauernden Eingriff stehen.

2. Rollen-Gewinde-Trieb gemäss Anspruch 1, dadurch gekennzeichnet, dass die Mittel aus längsverschiebbar mit den Lagerscheiben (4, 4′) verbundenen Mitnehmer-Stützen (6) bestehen, die die Lagerscheiben (4, 4′) als verdrehungssteifen Käfig (9) zusammenhalten.

3. Rollen-Gewinde-Trieb gemäss Anspruch 2, dadurch gekennzeichnet, dass die Mittel ferner Kugeln (13) umfassen, die von den Satelliten-Rollen (2) auf die Lagerscheiben (4, 4′) ausgeübte Drücke in achsialer Richtung auf die Lagerscheiben (4, 4′) übertragen.

4. Rollen-Gewinde-Trieb gemäss Anspruch 1, dadurch gekennzeichnet, dass die Mittel aus vorbestimmten Längsspielen für die Satelliten-Rollen (2) im Käfig (9), zwischen den Lagerscheiben (4, 4′), bestehen.

5. Rollen-Gewinde-Trieb gemäss Anspruch 4, dadurch gekennzeichnet, dass die Mittel ferner ein Flüssigkeitsverbundnetz aufweisen, das sämtliche Lagerstellen der Satelliten-Rollen (2) in den Lagerscheiben (4, 4′) miteinander verbindet, derart, dass an einzelnen Lagerstellen auftretende Längsdrücke gleichmässig auf alle Satelliten-Rollen (2) verteilt werden.

6. Rollen-Gewinde-Trieb gemäss Anspruch 2, dadurch gekennzeichnet, dass die Mittel aus Federn bestehen, die die Satelliten-Rollen (2) in den Lagerscheiben (4, 4′) einseitig federbelasten, derart, dass sie sich vor dem Aufsetzen des Käfigs (9) auf die Spindel (1) alle in einer gleichen achsialen Endlage befinden.

## Claims

1. A roller-thread driving gear having a central spindle (1) and an external nut (5) and also satellite rollers (2), which are positioned by means of journals (3) at their ends in a cage (9) with two bearing discs (4, 4') and are disposed paraxially to the spindle (1) around said spindle and mesh with said spindle and with internal toothing on the nut (5), characterised in that means (6) are provided which enable each satellite roller (2) to execute a predetermined relative movement along its longitudinal axis (x') during each pass of the driving gear from one stop to another, and in that the satellite rollers (2) between the journals (3) have pitched threads which are in constant engagement with a corresponding outer thread on the spindle (1) and with a corresponding inner thread on the nut (5).

2. A roller-thread driving gear as specified in claim 1, characterised in that the means consist of carrier supports (6), which are connected to the bearing discs (4, 4') in a longitudinally displaceable manner, and said supports hold together the bearing discs (4, 4') as a rotationally-rigid cage (9).

3. A roller-thread driving gear as specified in claim 2, characterised in that the means also comprise spheres (13) which transmit the pressures exerted by the satellite rollers (2) on the bearing discs (4, 4') in the axial direction to the bearing discs (4, 4').

4. A roller-thread driving gear as specified in claim 1, characterised in that the means consist of predetermined longitudinal clearances for the satellite rollers (2) in the cage (9), between the bearing discs (4, 4').

5. A roller-thread driving gear as specified in claim 4, characterised in that the means also have a fluid network which connects all the bearings of the satellite rollers (2) in the bearing discs (4, 4') to one another so that longitudinal stresses occurring at individual bearings are distributed evenly over all the satellite rollers (2).

6. A roller-thread driving gear as specified in claim 2, characterised in that the means consist of springs which unilaterally spring-load the satellite rollers (2) in the bearing discs (4, 4') so that they are all located in a single axial final position before the cage is placed on the spindle.

## Revendications

1. Système vis-écrou à rouleaux comportant une fusée centrale (1) et un écrou (5) situé à l'extérieur, ainsi que des rouleaux-satellites (2) montés dans une cage (9) pourvue de deux bagues d'appui (4, 4') au moyen de leurs tenons d'extrémité (3), dont les axes sont parallèles à la fusée, qui sont disposés tout autour de celle-ci et sont engrénés avec elle ainsi qu'avec une denture intérieure de l'écrou (5), caractérisé en ce qu'il est prévu des moyens permettant à chaque rouleau-satellite (2) d'exécuter un déplacement relatif prédéterminé le long de son axe longitudinal (x') et en ce que les rouleaux-satellites (2) présentent entre les tenons (3) des filets avec un pas, qui se trouvent en permanence en prise avec un filetage extérieur de la fusée (1) correspondant ainsi qu'avec un filetage intérieur correspondant de l'écrou (5).

2. Système vis-écrou à rouleaux selon la revendication 1, caractérisé en ce que lesdits moyens sont constitués par des appuis d'entraînement (6) reliés avec possibilité de déplacement longitudinal aux bagues d'appui (4, 4'), qui maintiennent ensemble les bagues d'appui (4, 4') sous forme d'une cage (9) rigide en torsion.

3. Système vis-écrou à rouleaux selon la revendication 2, caractérisé en ce que les moyens comprennent en outre des billes (3), qui transmettent aux bagues d'appui (4, 4') les poussées exercées en direction axiale par les rouleaux-satellites (2) aux bagues d'appui (4, 4').

4. Système vis-écrou à rouleaux selon la revendication 1, caractérisé en ce que les moyens sont constitués par des yeux longitudinaux prédéterminés des rouleaux-satellites (2) dans la cage (9), entre les bagues d'appui (4, 4').

5. Système vis-écrou à rouleaux selon la revendication 4, caractérisé en ce que les moyens présentent entre un réseau combiné avec un liquide, qui relie ensemble tous les points d'appui des rouleaux-satellites (2) dans les bagues d'appui (4, 4') de telle sorte que les poussées longitudinales exercées sur les divers points d'appui sont réparties régulièrement sur tous les rouleaux-satellites (2).

6. Système vis-écrou à rouleaux selon la revendication 2, caractérisé en ce que les moyens sont constitués par des ressorts qui soumettent d'un côté les rouleaux-satellites (2) à la charge d'un ressort dans les bagues d'appui (4, 4'), de manière telle qu'avant la mise en place de la cage (9) sur la fusée (1), ils se trouvent tous dans une même position axiale finale.